# EUROPÄISCHE PATENTSCHRIFT

(11) **EP 0 627 344 B1**
(45) Veröffentlichungstag und Bekanntmachung des Hinweises auf die Patenterteilung: **13.11.1996**
(21) Anmeldenummer: 94107471.8
(22) Anmeldetag: 13.05.1994
(51) Int. Cl.: B60R 22/34

(54) **Gurtaufroller für Sicherheitsgurt-Rückhaltesysteme in Fahrzeugen**
Retractor for safety belt restraining systems in vehicles
Enrouleur de ceinture pour systèmes de retenue par ceinture de sécurité dans les véhicules

(30) Priorität: 01.06.1993 DE 4318161
(43) Veröffentlichungstag der Anmeldung: 07.12.1994
(73) Patentinhaber: TRW Occupant Restraint Systems GmbH, 73553 Alfdorf (DE)
(72) Erfinder: Schmid, Johannes, D-73527 Schwäbisch Gmünd-Hussenhofen (DE); Mödinger, Thomas, D-73553 Alfdorf-Vordersteinenberg (DE)
(74) Vertreter: Degwert, Hartmut, Dipl.-Phys.

(56) Entgegenhaltungen:
- EP-A- 0 371 843
- GB-A- 2 076 635
- US-A- 4 534 520
- US-A- 4 776 574

## Beschreibung

Die Erfindung betrifft einen Gurtaufroller für Sicherheitsgurt-Rückhaltesysteme in Fahrzeugen, mit einer spiralförmigen Aufrollfeder, die einen radial inneren Federanschluß an der Welle der Gurtspule und einen radial äußeren Federanschluß an einem gehäusefesten Anschlußteil aufweist, und einer die Aufrollfeder mit einem zylindrischen Teil umgebenden Kassette (z.B. GB-A-2076 635).

Derartige Gurtaufroller mit einer Aufrollfeder sind in unterschiedlichen Ausführungsformen bekannt. Die Aufrollfeder ist in einer Kassette angeordnet, in die ein mit der Gurtspule verbundenes Ende einer Welle hineinragt. Das Ende der Welle weist einen Schlitz für das Anschlußende der Aufrollfeder auf und bildet dadurch einen radial inneren Federanschluß für die Aufrollfeder, der im Hinblick auf einen zylindrischen Teil der Kassette koaxial angeordnet ist. Ein radial äußerer Federanschluß für die Aufrollfeder wird durch einen in der Kassette fest angeordneten Zapfen gebildet, den das äußere Ende der Aufrollfeder umgreift. Die Aufrollfeder beaufschlagt die Gurtspule und somit das Gurtband mit einer Federkraft in Gurtbandaufwickelrichtung.

Bei im wesentlichen vollständig von der Spule abgezogenen Gurtband, ist die Aufrollfeder nahezu vollständig gespannt und bildet im Schnitt eine im wesentlichen kreisringförmige Wicklung um den inneren Federanschluß. Mit dem Einziehen des Gurtbandes entspannt sich die Feder zunehmend und stützt sich bereichsweise an der Innenseite des Mantels der Kassette ab. Der Raum, der von der Feder benötigt wird, wenn das Gurtband im wesentlichen vollständig aufgewickelt ist, ist hierbei kleiner als der von der Kassette begrenzte Raum, da die Aufrollfeder nie ganz entspannt wird. Bei den bekannten Gurtaufrollern mit einer in bezug auf den zylindrischen Teil der Kassette koaxialen Anordnung des inneren Federanschlusses ergibt sich ein sichelförmiger Freiraum in der Kassette, der von der Aufrollfeder nicht benutzt wird.

Der Erfindung liegt die Aufgabe zugrunde, bei einem Gurtaufroller der eingangs angegebenen Art den für die Unterbringung der Aufrollfeder erforderlichen Bauraum zu verkleinern.

Diese Aufgabe wird bei einem Gurtaufroller der eingangs angegebenen Art dadurch gelöst, daß die Welle mit dem inneren Federanschluß in bezug auf den zylindrischen Teil der Kassette in solcher Weise exzentrisch angeordnet ist, daß bei aufgewickeltem Gurtband der Außenumfang der Aufrollfeder im wesentlich konzentrisch in dem zylindrischen Teil der Kassette liegt. Infolge der exzentrischen Anordnung des inneren Federanschlusses und der konzentrischen Anordnung des Außenumfangs der Aufrollfeder bei aufgewickeltem Gurtband in der Kassette kann diese an den Außenumfang der Aufrollfeder angepaßt und somit verkleinert werden. Dadurch ergibt sich entweder eine kleinere Bauform des Gurtaufrollers, oder in dem geschaffenen Freiraum können andere Funktionsteile angeordnet werden. Beispielsweise kommt es nun in Betracht, Funktionsteile eines Strafferantriebs auf der Seite anzuordnen, an der die Aufrollfeder an der Welle der Gurtspule angreift. Die Verkleinerung der Kassette hat zudem den Vorteil, daß sich die Materialkosten für diese verringern.

Gemäß einer vorteilhaften Ausführungsform der Erfindung ist die Welle mit dem inneren Federanschluß gegenüber dem Mittelpunkt der Kassette in einer Richtung versetzt, die bei aufgewickeltem Gurtband im wesentlichen senkrecht zur Tangente an die Außenwindung der Aufrollfeder im Ablaufpunkt zum gehäusefesten Anschlußteil ist. Zweckmäßig ist es dabei, daß der Innendurchmesser der Kassette bei 2100 mm aufrollbarer Gurtlänge höchstens etwa 50 mm beträgt und daß insbesondere das Maß der Versetzung der Welle mit dem Federanschluß etwa 5 bis 10 mm beträgt. Durch diese Ausbildung wird eine optimale Bauform der Kassette erreicht, die den Raum optimal ausnutzt.

Bei einer weiteren Ausführungsform ist der Radius der gespannten Aufrollfeder im wesentlichen gleich dem kürzesten Abstand der Welle zum Mantel der Kassette. Vorzugsweise beträgt der Abstand zwischen der Montagebasis des Aufrollergehäuses und der Kassette etwa 20 mm.

Um eine hohe Lebensdauer der Aufrollfeder zu gewährleisten, ist bei zumindest annähernd aufgewickeltem Gurtband die Außenwindung der Aufrollfeder nicht an der Innenseite der Kassette abgestützt, wodurch vermieden wird, daß die äußere Federwindung an der Wandung der Kassette und die Federwindungen aufeinander reiben.

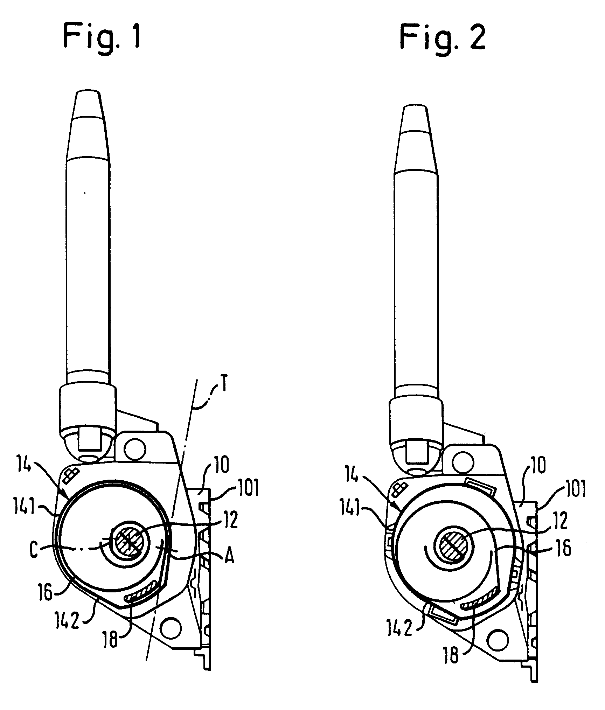

Weitere Merkmale und Vorteile der Erfindung ergeben sich aus der Beschreibung der bevorzugten Ausführungsform der Erfindung unter Bezugnahme auf die Zeichnung. Es zeigen:
Fig. 1
   eine Seitenansicht eines Gurtaufrollers mit einem Schnitt durch eine Kassette mit einer Aufrollfeder gemaß einer Ausführungsform der Erfindung;
Fig. 2
   eine Seitenansicht eines Gurtaufrollers mit einem Schnitt durch eine Kassette mit einer Aufrollfeder nach dem Stand der Technik;
Figuren 3a und 3b
   eine schematische Schnittansicht der Kassette von Fig. 1 in zwei unterschiedlichen Aufrollzuständen; und
Figuren 4a und 4b
   eine schematische Schnittansicht der Kassette von Fig. 2 in zwei unterschiedlichen Aufrollzuständen.

Bei der gezeigten Ausführungsform ist der Gurtaufroller mit einem pyrotechnischen Kolben/Zylinder-Antrieb für die Strafferfunktion zu einer Baugruppe vereinigt.

In einem Aufrollergehäuse 10 des Gurtaufrollers ist eine Gurtspule drehbar gelagert. Die Gurtspule weist eine Welle 12 auf, die in eine seitlich am Aufrollergehäuse 10 angeordnete Kassette 14 hineinragt. Am Außenumfang der in die Kassette 14 hineinragenden Welle 12 liegt entsprechend dem Aufrollzustand des Gurtbands der innere Teil einer spiralförmigen Aufrollfeder 16 an, deren Windungen die Welle 12 umgeben. Die Welle 12 weist einen das eine Ende der Aufrollfeder 16 aufnehmenden Durchgangsschlitz auf, der somit einen radial inneren Federanschluß für die Aufrollfeder 16 bildet. Das andere Ende der Aufrollfeder 16 ist an einem mit der Kassette 14 fest verbundenen Zapfen 18 angeschlossen, indem es diesen umgreift. Somit bildet der Zapfen 18 einen radial äußeren Federanschluß für die Aufrollfeder 16.

Die Kassette 14 besteht aus einem zylindrischen Teil 141 und einem sich verjüngenden Bereich 142, in dem der Zapfen 18 angeordnet ist. Die Welle 12 mit dem inneren Federanschluß ist in bezug auf den zylindrischen Teil 141 der Kassette 14 in solcher Weise exzentrisch angeordnet, daß bei aufgewickeltem Gurtband der Außenumfang der Aufrollfeder 16 im wesentlichen konzentrisch in dem zylindrischen Teil 141 der Kassette 14 liegt.

Die Welle 12 mit dem inneren Federanschluß ist aufgrund der exzentrischen Anordnung gegenüber dem Mittelpunkt C der Kassette 14 in einer Richtung versetzt, die bei aufgewickeltem Gurtband im wesentlichen senkrecht zur Tangente T an die Außenwindung der Aufrollfeder 16 im Ablaufpunkt A zum gehäusefesten Zapfen 18 ist (Fig. 1).

Weiterhin ist die Kassette 14 so an die Aufrollfeder 16 angepaßt, daß die Außenwindung der Aufrollfeder 16 bei zumindest annähernd aufgewickeltem Gurtband nicht an der Innenseite der Kassette 14 abgestützt ist. Der Innendurchmesser des zylindrischen Teils 141 der Kassette 14 gemaß der erfindungsgemäßen Ausführungsform ist bei einer aufwickelbaren Gurtbandlänge von 2100 mm höchstens etwa 50 mm. Das Maß der Versetzung beträgt dabei etwa 5 bis 10 mm.

In bekannter Weise ist die Kassette 14 an dem Aufrollergehäuse 10 des Gurtaufrollers befestigt. Zwischen dem Aufrollergehäuse 10 und der Welle 12 der Gurtspule ist deshalb die Aufrollfeder 16 wirksam und beaufschlagt die Gurtspule mit einer Federkraft in Gurtbandaufwickelrichtung. Wird Gurtband abgezogen, dann wird die Aufrollfeder 16 zunehmend um die Welle 12 gewickelt und somit die Aufrollfeder 16 stärker gespannt.

In Fig. 2 ist ein Gurtaufroller nach dem Stand der Technik dargestellt. Hierbei ist der zylindrische Teil der Kassette 141 so in bezug auf die Welle 12 am Aufrollergehäuse angebracht, daß die Welle 12 koxial zum zylindrischen Teil 141 der Kassette 14 angeordnet ist. Der Innendurchmesser des zylindrischen Teils 141 beim Gurtaufroller beträgt nach dem Stand der Technik 54 mm.

Die erfindungsgemäße Ausführungsform gemäß Fig. 1 weist somit gegenüber der Ausführungsform nach dem Stand der Technik gemäß Fig. 2 einen kleineren Innendurchmesser des zylindrischen Teils 141 der Kassette 14 auf.

Die Montagebasis 101 des Aufrollergehäuses 10 ist in bekannter Weise am Fahrzeugaufbau befestigt. Durch die Verkleinerung der Kassette 14 nach der Erfindung (Fig. 1) und ihre Anordnung an der Außenwand des Gehäuses beträgt der Abstand zwischen der Montagebasis 101 und der Kassette 14 20 mm, wodurch nunmehr Raum für weitere konstruktive Maßnahmen geschaffen ist, beispielsweise für die Anordnung von Funktionsteilen des Strafferantriebs. Bei dem bekannten Gurtaufroller (Fig. 2) beträgt der Abstand von der Montagebasis 101 zur Kassette 14 hingegen lediglich 10 mm.

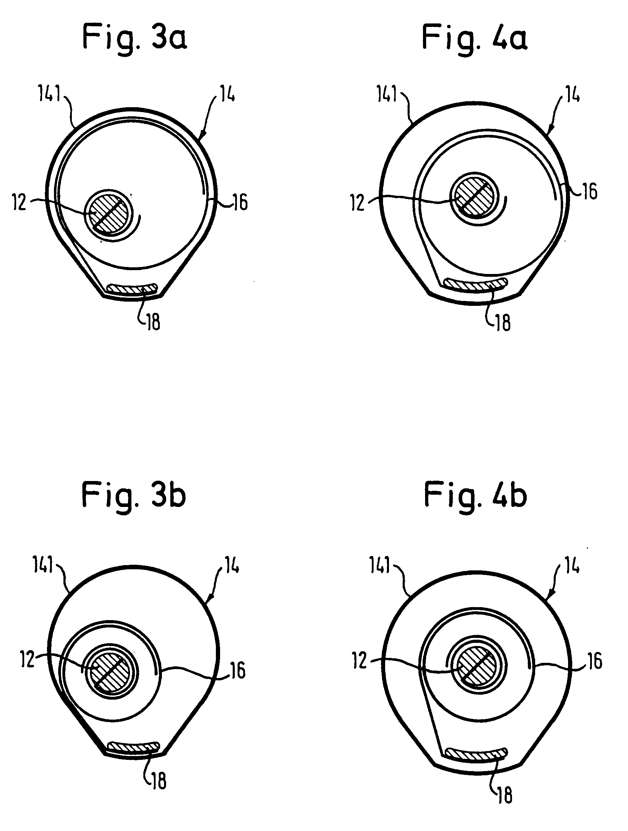

In den Figuren 3a und 4a ist eine Schnittansicht der Kassette 14 nach der Erfindung und nach dem Stand der Technik dargestellt. Die Aufrollfeder 16 wird dort in einem Zustand gezeigt, in dem das Gurtband nahezu vollständig auf die Gurtspule aufgewickelt ist und somit die Aufrollfeder 16 schwächer gespannt ist.

Nach Fig. 3a liegt der Außenumfang der Aufrollfeder 16 im wesentlichen konzentrisch im zylindrischen Teil 141 der Kassette 14 und ist mit geringem Abstand von der Innenwandung des zylindrischen Teils 141 der Kassette 14 angeordnet. Die Aufrollfeder 16 wird ausgehend von dem gehäusefesten Zapfen 18 in der Kassette 14 außermittig gedrückt. Die Außenwicklung der Aufrollfeder 16 des erfindungsgemäßen Gurtaufrollers nimmt bei aufgewickeltem Gurtband einen nahezu kreisförmigen Verlauf.

Nach Fig. 4a stützt sich hingegen in dem bekannten Gurtaufroller die Aufrollfeder 16 bei aufgewickeltem Gurtband über einen Teilbereich an der Innenwandung des zylindrischen Teils 141 der Kassette 14 ab und bildet einen im Schnitt sichelförmigen Freiraum, der jedoch für die Auf- und Abrollbewegung der Aufrollfeder 16 um die Welle 12 nicht benötigt wird.

In den Figuren 3b und 4b sind die gespannten Aufrollfedern 16 nach der Erfindung und nach dem Stand der Technik gezeigt, wenn das Gurtband nahezu vollständig von der Gurtspule abgewickelt ist. Die Wicklungen der spiralförmigen Aufrollfeder 16 liegen dabei eng aufeinander und bilden im Schnitt einen Kreisring um die Welle 12. Nach der Erfindung entspricht der kürzeste Abstand zwischen dem Mantel der Kassette 14 und der Achse der Welle 12 dem Radius der gespannten Aufrollfeder 16 (Fig. 3b). Nach dem Stand der Technik ergibt sich hingegen im gespannten Zustand der Aufrollfeder 16 ein nahezu ringförmiger Freiraum um die Aufrollfeder 16.

Durch die exzentrische Anordnung der Welle 12 mit dem inneren Federanschluß in der Kassette 14 ist es möglich geworden, den Innendurchmesser der Kassette 14 in bezug auf den Innendurchmesser des zylindrischen Teils 141 der Kassette 14 nach dem Stand der Technik zu verkleinern. Innerhalb vorgegebener Abmessungen des Gurtaufrollers ist nunmehr Raum für andere Zwecke bzw. weitere konstruktive Maßnahmen.

## Patentansprüche

1. Gurtaufroller für Sicherheitsgurt-Rückhaltesysteme in Fahrzeugen, mit einer spiralförmigen Aufrollfeder (16), die einen radial inneren Federanschluß an der Welle (12) der Gurtspule und einen radial äußeren Federanschluß an einem gehäusefesten Anschlußteil (18) aufweist, und einer die Aufrollfeder (16) mit einem zylindrischen Teil (141) umgebenden Kassette (14), **dadurch gekennzeichnet,** daß die Welle (12) mit dem inneren Federanschluß in bezug auf den zylindrischen Teil (141) der Kassette (14) in solcher Weise exzentrisch angeordnet ist, daß bei aufgewickeltem Gurtband der Außenumfang der Aufrollfeder (16) im wesentlichen konzentrisch in dem zylindrischen Teil (141) der Kassette (14) liegt.

2. Gurtaufroller nach Anspruch 1, **dadurch gekennzeichnet,** daß die Welle (12) mit dem inneren Federanschluß gegenüber dem Mittelpunkt (C) der Kassette (14) in einer Richtung versetzt ist, die bei aufgewickeltem Gurtband im wesentlichen senkrecht zur Tangente an die Außenwindung der Aufrollfeder (16) im Ablaufpunkt zum gehäusefesten Anschlußteil (18) ist.

3. Gurtaufroller nach Anspruch 1 oder 2, **dadurch gekennzeichnet,** daß der Innendurchmesser der Kassette (14) bei 2100 mm aufrollbarer Gurtbandlänge höchstens etwa 50 mm beträgt.

4. Gurtaufroller nach den Ansprüchen 2 und 3, **dadurch gekennzeichnet,** daß das Maß der Versetzung der Welle (12) mit dem inneren Federanschluß etwa 5 bis 10 mm beträgt.

5. Gurtaufroller nach einem der vorstehenden Ansprüche, **dadurch gekennzeichnet,** daß der Radius der gespannten Aufrollfeder (16) im wesentlichen gleich dem kürzesten Abstand der Achse der Welle (12) zum Mantel der Kassette (14) ist.

6. Gurtaufroller nach einem der Ansprüche 2 bis 5, **dadurch gekennzeichnet,** daß der Abstand zwischen der Montagebasis (101) des Aufrollergehäuses (10) und der Kassette (14) etwa 20 mm beträgt.

7. Gurtaufroller nach einem der vorstehenden Ansprüche, **dadurch gekennzeichnet,** daß bei zumindest annähernd aufgewickeltem Gurtband die Außenwindung der Aufrollfeder (16) nicht an der Innenseite der Kassette (14) abgestützt ist.

## Claims

1. A belt retractor for vehicular seat belt restraining systems having a spiral retraction spring (16) including a radially inner spring connection on the shaft (12) of the belt reel and a radially outer spring connection on a connecting part (18) firmly connected to the housing, and a cassette (14) surrounding the retraction spring (16) with a cylindrical part (141), **characterized by** the shaft (12) with the inner spring connection being eccentrically disposed with respect to the cylindrical part (141) of the cassette (14) in such a manner that, when the belt webbing is fully coiled, the outer circumference of the retraction spring (16) is disposed substantially concentric in the cylindrical part (141) of the cassette (14).

2. A belt retractor according to claim 1 **characterized by** the shaft (12) together with the inner spring connection being offset from the center point (C) of the cassette (14) in a direction which - when the belt webbing is fully coiled - is substantially perpendicular to the tangent on the outer winding of the retraction spring (16) at the point of run-out towards the connection part (18) firmly connected to the frame.

3. A belt retractor according to claim 1 or 2 **characterized by** the inner diameter of the casette (14) being not more than approx. 50 mm for a coilable belt length of 2100 mm.

4. A belt retractor according to claim 2 and 3 **characterized by** the dimension of the offset of the shaft (12) with respect to the inner spring connection being approx. 5 to 10 mm.

5. A belt retractor according to any of the preceding claims **characterized by** the radius of the tensioned retraction spring (16) being essentially the same as the shortest distance of the shaft (12) from the shell of the cassette (14).

6. A belt retractor according to any of the preceding claims 2 to 5 **characterized by** the distance between the base mounting fixture (101) of the retractor housing (10) and the cassette (14) being approx. 0,20 mm.

7. A belt retractor according to any of the preceding claims **characterized by** the outer winding of the retraction spring (16) not being supported at the inside of the cassette (14) when the webbing is at least substantially fully coiled-up.

## Revendications

1. Enrouleur de ceinture pour systèmes de retenue par ceinture de sécurité de véhicules automobiles, comportant un ressort d'enroulement (16) en forme de spirale, qui présente un raccord de ressort radialement intérieur sur l'axe (12) de la bobine de sangle et un raccord de ressort radialement extérieur sur un élément de raccord (18) solidaire du boîtier, et comportant une cassette (14) entourant le ressort d'enroulement (16) avec une partie cylindrique (141), caractérisé en ce que l'axe (12) est placé de façon excentrée avec le raccord de ressort intérieur par rapport à la partie cylindrique (141) de la cassette (14), de manière que, lorsque la sangle est enroulée, le pourtour extérieur du ressort d'enroulement (16) soit sensiblement concentrique à la partie cylindrique (141) de la cassette (14).

2. Enrouleur de ceinture selon la revendication 1, caractérisé en ce que l'axe (12) avec le raccord de ressort intérieur est décalé par rapport au centre (C) de la cassette (14) dans une direction qui, lorsque la sangle est enroulée, est sensiblement perpendiculaire à la tangente à la spire extérieure du ressort d'enroulement (16), au point de sortie vers l'élément de raccord (18) solidaire du boîtier.

3. Enrouleur de ceinture selon les revendications 1 ou 2, caractérisé en ce que le diamètre intérieur de la cassette (14), pour une longueur de sangle enroulable de 2100 mm, est d'environ 50 mm au maximum.

4. Enrouleur de ceinture selon les revendications 2 et 3, caractérisé en ce que la distance du décalage de l'axe (12) avec le raccord de ressort intérieur est comprise entre 5 et 10 mm environ.

5. Enrouleur de ceinture selon l'une des revendications précédentes, caractérisé en ce que le rayon du ressort d'enroulement (16) tendu est sensiblement égal à la distance la plus courte entre la ligne centrale de l'axe (12) et l'enveloppe de la cassette (14).

6. Enrouleur de ceinture selon l'une des revendications 2 à 5, caractérisé en ce que la distance entre la base de montage (101) du boîtier (10) de l'enrouleur et la cassette (14) est égale à 20 mm environ.

7. Enrouleur de ceinture selon l'une des revendications précédentes, caractérisé en ce que dans le cas où la sangle est au moins approximativement enroulée, la spire extérieure du ressort d'enroulement (16) ne s'appuie pas contre le côté intérieur de la cassette (14).
